(19) Europäisches Patentamt
European Patent Office
Office européen des brevets

(11) EP 0 157 580 B2

(12) NEW EUROPEAN PATENT SPECIFICATION

(45) Date of publication and mention of the opposition decision:
**10.04.1996 Bulletin 1996/15**

(45) Mention of the grant of the patent:
**05.12.1990 Bulletin 1990/49**

(21) Application number: **85302098.0**

(22) Date of filing: **26.03.1985**

(51) Int Cl.$^6$: **C08L 83/04**
// (C08L83/04, C08K5:54, 5:57, 3:26)

# (54) Oil resistant low modulus silicone sealant composition

Ölbeständige Silikondichtungsmasse mit niedrigem Modul

Composition d'étanchéité résistant à l'huile, avec module bas, à base de silicone

(84) Designated Contracting States:
**CH DE FR GB IT LI SE**

(30) Priority: **27.03.1984 US 593866**

(43) Date of publication of application:
**09.10.1985 Bulletin 1985/41**

(73) Proprietor: **LOCTITE CORPORATION**
**Newington, Connecticut 06111 (US)**

(72) Inventors:
- **Thompson, James Edward**
**Lakewood Ohio 44107 (US)**
- **Beers, Melvin Dale**
**Aurora Ohio 44202 (US)**

(74) Representative: **Marchant, James Ian**
**Elkington and Fife**
**Prospect House**
**8 Pembroke Road**
**Sevenoaks, Kent TN13 1XR (GB)**

(56) References cited:

| | |
|---|---|
| DE-A- 3 212 008 | DE-B- 1 118 454 |
| DE-B- 1 118 454 | US-A- 3 189 576 |
| US-A- 3 189 576 | US-A- 3 678 003 |
| US-A- 4 247 445 | US-A- 4 323 489 |
| US-A- 4 323 489 | US-A- 4 371 682 |

- **Silopren-E-Informationen (Standardrezeptur und Allgemeines)**
- **Chemical Abstracts, Vol 97, 1982, abstract nr. 184124a**

Remarks:
The file contains technical information submitted after the application was filed and not included in this specification

EP 0 157 580 B2

## Description

The present invention relates to a low modulus, low odor, one component, room temperature valucanizable silicone rubber composition suitable as a formed-in-place gasketing sealant. The composition is of low volatility as well as being non-corrosive with regard to ferrous and aluminium substrates.

Low modulus characteristics are desirable in silicone rubbers intended for sealant applications to accommodate joint movement due to vibration and thermal cycling. Less stress is then exerted on a sealant-metal bond interface which decreases the probability of oil leaks. However, oil resistance has traditionally been improved by the use of comparatively high crosslink densities. This results in lower elongation properties and, hence, reduced movement capability. If lower modulus is achieved by incorporating fewer crosslinks into the elastomer, then the polymer backbone is subject to more rapid deterioration as a result of attack by nucleophilic or electrophilic agents at elevated temperatues. It has not generally been possible to achieve low modulus, high elongation silicone elastomers with good oil resistance.

DE-A-3212008 discloses a composition which comprises a diorganopolysiloxane containing condensable terminal end groups; a silicon compound containing per molecule at least three amino groups attached to silicon by nitrogen or oxime groups attached to silicon by oxygen, or a total of at least three amino groups attached to silicon by nitrogen and oxime groups attached to silicon by oxygen; and the reaction product of a silane containing per molecule at least two monofunctional hydrocarbon radicals attached to silicon by oxygen (optionally interrupted by ether oxygen) or an oligomer thereof, with a diorganotin diacylate. The compositions may also contain agents for improving adhesion and specific reference is made to organosilanes containing at least one amino group attached to silicon by carbon of the type described in US-A-3678003 or US-A-4191817. These documents relate essentially to silanes and siloxanes containing in the molecule an amino group bonded to silicon by an alkylene moiety optionally interrupted by an ether linkage and in which remaining valencies of the nitrogen atom are bonded to hydrogen or an alkylene moiety.

Example 1 of DE-A-3212008 and example 1b of US-A-3678003 both disclose compositions comprising silanol terminated diorganosiloxane base polymer, oxime cross-linking agent, an adhesion improving agent of the type referred to above an organo tin catalyst and a calcium carbonate filler.

Although DE-A-3212008, US-A-3678003 and US-A-4191817 all relate to providing room temperature vulcanisable silicone rubber compositions, they are not concerned specifically with the use of such compositions in applications where oil resistance is required and no mention is made of the problem of improving oil resistance.

US-A-3,189,576 relates to organosilicon intermediates containing silicon bonded oxime radicals.

US-A-3,837,878 relates to a process for treating silica filters by contacting the silica filler with a mixture of a hydroxyl amine, a cyclic siloxane and a silyl nitrogen compound. The end result is a silica filler having a large number of organo siloxy groups appended to it.

US-A-4,356,116 relates to a devolatilized room temperature vulcanizable silicone rubber composition comprising a silanol polymer, a plasticizing fluid, containing a combination of monofunctional, difunctional and trifunctional siloxy groups, a crosslinking agent, a curing promoter and, optionally, a filler.

US-A-4,395,526 relates to a stable, substantially acid free, one component curable polyalkoxy-terminated organopolysiloxane composition including a condensation catalyst, such as a tin compound. The fillers include titanium dioxide, iron oxide, fumed silica, carbon black, calcium carbonate, quartz, and the like.

However, none of these patents teach or suggest a low modulus silicone elastomer having good oil resistance and high elongation.

Formed-in-place silicone gasketing has been utilized at the OEM level in the automotive industry since 1971 (Handbook of Adhesives, Second Edition, Skeist, published by Van Nostrand, Reinhold Co. (1977) Chapter 39 by Beers). The first generation sealants used acetoxy curing systems, such as those disclosed in US-A-3,035,016, US-A-3,133,891 and US-A-3,382,205. The next generation involved amine curing systems such as those disclosed in US-A-3,032,528 and octoate curing systems as disclosed in US-A-4,356,116 and US-A-4,257,932. Recently, formed-in-place silicone gasketing systems have been reported using methoxysilicone vulcanization (General Motors specification 9985530).

Chemical Abstracts, 97, 184124a (which is an abstract of Japanese Patent No. 8276055) discloses oil-resistant sealing compositions containing silanol-terminated polydiorganosiloxanes, organosilanes or their partially hydrolysed condensates, silica filler and magnesium oxide.

In as much as improved oil resistance has traditionally been achieved in silicone gasketing technology by operating at comparatively high crosslink densities (US-A-4,257,932) it was not to be expected that a silicone rubber composition could be obtained with a low modulus, high elongation and good oil resistance. The present invention provides such a silicone rubber composition which is suitable as a formed-in-place gasketing sealant. The composition has the further advantage of low odor.

The silicone rubber composition according to the invention is a one component room-temperature vulcanizable composition comprising a devolatilized silanol terminated diorganosiloxane polymer, and optionally a devolatilized trimethylsilyl terminated diorganopolysiloxane plasticizer.

The composition is characterized in that it contains an oxime crosslinking agent together with a hydrophobic calcium

carbonate filler.

Thus the low modulus, one component, room temperature, vulcanizable silicone rubber composition according to the invention comprises:

from 25 to 90 percent by weight based upon the total weight of the composition of a devolatilized silanol-terminated diorganosiloxane base polymer having a viscosity from 2,000 to 250,000 mPas (centipoise) at 25°C, in which the organo groups are the same or different and are selected from alkyl having from 1 to 8 carbon atoms, cycloalkyl having from 4 to 7 carbon atoms, alkenyl having from 2 to 8 carbon atoms, aryl or alkyl substituted aryl having from 6 to 14 carbon atoms, and fluoroalkyl having from 1 to 8 carbon atoms; and
from 0 to 40 percent by weight based upon the total weight of the composition of a devolatilized diorganopolysiloxane fluid plasticizer terminated with triorganosiloxy groups, in which the organo groups are monovalent radicals as set forth above with regard to the base polymer, the plasticizer having a viscosity from 50 to 100,000 mPas (centipoises) at 25°C;
together with a cross-linking agent, a catalyst and a filler.

The composition is characterised in that it contains as the crosslinking agent from 2 to 15 percent by weight based upon the total weight of the composition of an oxime of the formula

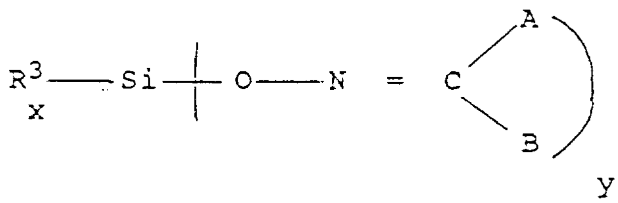

wherein y is 3.2 to 3, x is 0.8 to 1.0, and $R^3$ is selected from alkyl having from 1 to 8 carbon atoms, alkenyl having from 2 to 8 carbon atoms, haloalkyl having from 1 to 8 carbon atoms, trifluoroalkyl having from 1 to 8 carbon atoms, and haloalkenyl having from 2 to 8 carbon atoms, A and 3, which may be the same or different, are each selected from hydrogen, alkyl having from 1 to 8 carbon atoms, haloalkyl having from 1 to 8 carbon atoms, cycloalkyl having from 4 to 7 carbon atoms, alkenyl having from 2 to 8 carbon atoms, and cycloalkenyl having from 4 to 7 carbon atoms, with the proviso that only one of A and B may be hydrogen; together with

from 0.01 to 0.5 percent by weight based upon the total weight of the composition of an argano tin catalyst; and
from 5 to 60 percent by weight based upon the total weight of the composition of a hydrophobic calcium carbonate filler, which has a water content of 0.2 percent by weight or less except that the water content may be up to 0.4 percent by weight provided that the hydrophobic calcium carbonate filler is present in an amount of 15 percent by weight or less, with the proviso that the composition does not contain a silane or siloxane containing in the molecule an amino group bonded to silicon by an alkylene moiety optionally interrupted by an ether linkage and in which remaining valencies of the nitrogen atom are bonded to hydrogen on an alkylene moiety.

The present invention also provides the use of

i) from 2 to 15 percent by weight based upon the total weight of the composition of an oxime of the formula

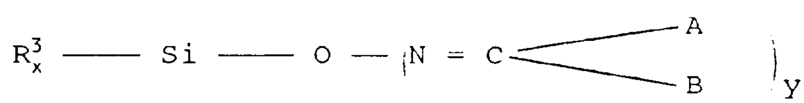

wherein y is 3.2 to 3, x is 0.8 to 1.0, and $R^3$ is selected from alkyl having from 1 to 8 carbon atoms, alkenyl having from 2 to 8 carbon atoms, haloalkyl having from 1 to 8 carbon atoms, trifluoroalkyl having from 1 to 8 carbon atoms, and haloalkenyl having from 2 to 8 carbon atoms, A and B, which may be the same or different, are each selected from hydrogen, alkyl having from 1 to 8 carbon atoms, haloalkyl having from 1 to 8 carbon atoms, cycloalkyl having from 4 to 7 carbon atoms, alkenyl having from 2 to 8 carbon atoms, and cycloalkenyl having from 4 to 7 carbon atoms, with the proviso that only one of A and B may be hydrogen;
ii) from 0.01 to 0.5 percent by weight based upon the total weight of the composition of an organo tin catalyst; and
iii) from 5 to 60 percent by weight based upon the total weight of the composition of a hydrophobic calcium carbonate filler, which has a water content of 0.2 percent or less, except that the water content may be up to 0.4 percent provided that the filler is present in an amount of 15 percent or less;

to provide oil resistance together with low modulus in a one component, room temperature, vulcanizable silicone rubber composition comprising in addition:

from 25 to 90 percent by weight based on the total weight of the composition of a devolatilized silanol-terminated diorgano-siloxane base polymer having a viscosity from 2,000 to 250,000 mPas (centipoise) at 25°C, in which the organo groups are the same or different and are selected from alkyl having from 1 to 8 carbon atoms, cycloalkyl having from 4 to 7 carbon atoms, alkenyl having from 2 to 8 carbon atoms, aryl or alkyl substituted aryl having from 6 to 14 carbon atoms, and fluoroalkyl having from 1 to 8 carbon atoms; and
from 0 to 40 percent by weight based upon the total weight of the composition of a devolatilized diorganopolysiloxane fluid plasticizer terminated with triorganosiloxy groups, in which the organo groups are monovalent radicals as set forth above with regard to the base polymer, the plasticizer having a viscosity from 50 to 100,000 mPas (centipoise) at 25°C.

The basic ingredient of the low modulus, high elongation, good oil resistance, room temperature vulcanizable (RTV) silicone composition of the present invention is a devolatilized silanol terminated diorganosiloxane polymer. This linear polymer can be devolatilized in any manner such as set forth in US-A-4,356,116 and generally has a viscosity of from 2,000 to 250,000 mPas (centipoise) and preferably from 10,000 to 120,000 mPas (centipoise). The polymer may be represented by the formula

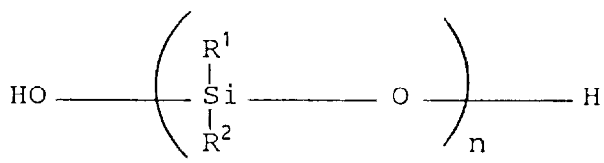

wherein n is from 300 to 1,000, $R^1$ and $R^2$, which may be the same or different, each represent an alkyl group having from 1 to 8 carbon atoms with methyl being preferred, a cycloalkyl group having from 4 to 7 carbon atoms such as cyclohexyl, an alkenyl group having from 2 to 8 carbon atoms such as allyl with vinyl being preferred, an aryl or an alkyl substituted aryl group having from 6 to 14 carbon atoms such as phenyl or methylphenyl, or a fluoroalkyl group having from 1 to 8 carbon atoms with 3,3,3-trifluoropropyl being preferred. The amount of the linear polymer generally ranges from 25 to 90 percent by weight and preferably from 30 to 60 percent by weight based upon the total weight of the composition. Such polymers are commercially available and are manufactured for example by Mobay, Union Carbide and Wacker Chemie.

The plasticizer utilized along with the linear base polymer is a devolatilized triorganosiloxy terminated diorganopolysiloxane fluid which is present in an amount of 0 to 40 percent by weight for example 1 to 40 percent by weight and desirably from 5 to 25 percent by weight based upon the total composition. The plasticizer lowers the durometer and modulus of the cured rubber and, lowers the viscosity of the overall system or composition. However, the viscosity of the plasticizer should not be too low as it may tend to bleed out of the composition. Accordingly, the viscosity of the plasticizer generally ranges from 50 to 100,000 mPas (centipoise) and is preferably from 500 to 10,000 mPas (centipoise).

The plasticizer is a diorganopolysiloxane polymer terminated with monofunctional, triorganosiloxy end groups. The organo compounds within the repeating units are the same as $R^1$ and $R^2$ set forth above. However, it may contain trace quantities of trifunctional monoorganosiloxy units originating from impurities in the starting materials. The siloxy units may contain an alkyl group having from 1 to 8 carbon atoms with methyl being preferred. The number of repeating units in the plasticizer is generally from 20 to 900. As with the linear base polymer, the plasticizer is devolatilized in accordance with any conventional manner or process, well known to the art. A specific example of devolatilization is set forth in a US-A-4,356,116.

In order to reinforce the polymer network as well as to impart non-sag to the system, a thixotropic agent may be added to the overall composition. This agent which also adds physical strength to the system desirably is a treated or an untreated silica filler with a treated fumed silica filler being preferred. Treated silica fillers generally have lower moisture content, and result in better low modulus properties. The amount of silica filler generally ranges from 1 to 20 percent by weight with from 3 to 8 percent by weight being preferred. Treated or untreated silica fillers are well known to the art and generally any such conventional fillers can be utilized. Examples of specific silica fillers are set forth in US-A-3,837,878. Additionally, treated silicas as set forth in US-A-2,938,009, US-A-3,004,859, and US-A-3,635,743 can be used. Typically, the silica filler has a very high surface area such as about 200 $m^2$/gram.

Optionally, from 0.1 to 5 percent by weight and preferably from 0.2 to 3 percent by weight based upon the total weight of the overall composition of a thermal ageing additive can be included. This optional component is an additive which reduces oxidation and thermal rearrangement of polymers at elevated temperatures. Suitable additives include

materials such as cerium neodecanoate, rare earth octoates and iron octoate. Representative samples also usually include pigments such as carbon black, iron oxide powder, titanium dioxide, aluminium powder, and the like. Naturally, any desired color can be utilized.

According to the present invention an organo tin salt catalyst is used in association with the oxime crosslinking agent. The amount of the said catalyst is generally from 0.01 to 0.5 percent by weight and preferably from 0.02 to 0.2 percent by weight based upon the total weight of the composition. The tin catalyst is generally an organo tin compound well known to the art and as set forth in US-A-4,356,116, and US-A-4,395,526. Examples of specific tin compounds include dibutyltindilaurate, dibutyltindiacetate, tin octoate, dimethyl tin dibutyrate, triethyl tin tartrate, tin oleate, dibutyl tin oxide, and dimethyltinbis neodecanoate.

An important aspect of the present invention is the use of specific oxime curing or crosslinking agents. It has been found that such agents readily accommodate the formulation of general low modulus properties and allow the overall system or composition to have high elongation as well as very good oil resistant properties. Low modulus characteristics are desirable in various applications of the present composition such as in gasketing applications since they allow for maximum joint movement without exposing the substrate-sealant interface to high stresses which can lead to adhesive failure of the interface, thus resulting in oil leak paths. The low modulus behavior of the composition according to the invention thus ensures a good oil seal.

This type of oxime curing agent is represented by the formula

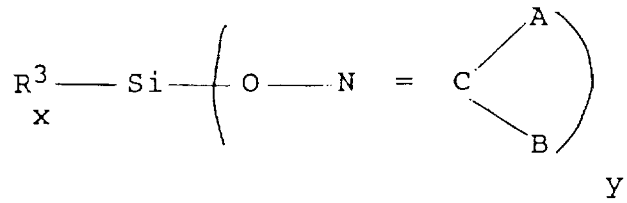

where y is 3.2 to 3, preferably 3, x is 0.8 to 1, preferably 1, and wherein $R^3$ is alkyl having from 1 to 8 carbon atoms with methyl being preferred, alkenyl having from 2 to 8 carbon atoms with vinyl being preferred, haloalkyl having from 1 to 8 carbon atoms, trifluoroalkyl having from 1 to 8 carbon atoms, or haloalkenyl having from 2 to 8 carbon atoms. A and B which may be the same or different, are each selected from hydrogen, alkyl having from 1 to 8 carbon atoms, haloalkyl having from I to 8 carbon atoms, cycloalkyl having from 4 to 7 carbon atoms, alkenyl having from 2 to 8 carbon atoms, and a cycloalkenyl having from 4 to 7 carbon atoms; with the proviso that only one of A and B may be hydrogen. A is preferably methyl with B preferably being ethyl.

The amount of the oxime curing agent ranges from 2 to 15 percent by weight based on the total weight of the composition with 4 to 8 percent by weight being preferred.

Preparation of the oxime curing agents defined above is generally well known to the art as set forth in US-A-3,189,576.

In order to ensure that gellation or viscosity increases do not occur, an excess of oxime crosslinking agents relative to the silanol groups in the base polymer is utilized as an equivalent ratio of from 1.2 to 4.0 with from 1.5 to 2.5 being preferred.

Another important aspect of the present invention is the use of a hydrophobic calcium carbonate filler which imparts a desirable oil stabilizing effect as well as a low degree of reinforcement to the polymer to allow for the incorporation of low modulus properties. The amount of hydrophobic filler generally ranges from 5 to 60 percent by weight based on the total weight of the composition with from 15 to 45 percent by weight being preferred. It is important to the present invention that the water level of the hydrophobic filler be very low. Accordingly, if small amounts of filler are utilized, that is 15 percent by weight or less, the water level can range up to 0.4 percent by weight based upon the total weight of hydrophobic filler. Otherwise, the water content is 0.2 percent by weight or less with 0.1 percent by weight or less being preferred.

According to test data, it appears that an important criterion of a suitable hydrophobic filler is that it be a treated ground or precipitated calcium carbonate. Accordingly, specific examples of suitable fillers include stearic acid treated ground calcium carbonate, stearic acid treated precipitated calcium carbonate, and calcium carbonate having the above noted low moisture contents. The general particle size is from 0.03 to 50 µm with 0.05 to 20 pm being the most desirable range. Generally, talc, silica and clay type materials are not suitable due to their high moisture content and lack of stabilization properties.

In addition to the above set forth components, various other conventional compounds such as antioxidants, such as cerium neodecanoate, rare earth octoate and iron octoate, can be utilized in the composition of the present invention in conventional amounts such as 0.1 to 0.3 percent.

The above described components result in a low modulus, low odor, one-component RTV silicone rubber composition suitable as a formed-in-place gasketing sealant which is noncorrosive with regard to iron, steel and aluminium substrates. In addition, the composition of the present invention has a low modulus, high elongation and very good oil

resistant properties. Moreover, the composition readily meets low silicone volatility requirements such as those of General Motors specification 9985443.

In general, compositions of the present invention have a modulus value at 50 percent of 517 kPa (75 psi) or less with 345 kPa (50 psi) or less being preferred. The tensile strength at 75 percent modulus is 621 kPa (90 psi) or less with 483 kPa (70 psi) or less being preferred. At 100 percent modulus the value is usually 758 kPa (110 psi) or less with 621 kPa (90 psi) or less being preferred. With regard to the oil resistance, the percentage decrease in tensile strength after two weeks at 149°C (300°F in 5W30 engine fill oil is generally 40 percent or less with 30 percent or less being preferred.

The compositions of the present invention are ideally suited as in-place gasketing sealants in that they have good thermal resistance at high temperatures for example about 149°C to 260°C (300°F to 500°F) and yet still maintain good flexibility at low temperatures for example to about -62°C (-80°F). The particular area of usage is in various internal combustion engines and for various gaskets thereof such as oil pan, valve cover, engine side seal, water seal, intake seal, and the like.

The compositions are generally prepared by charging the various ingredients into a mixer under dry conditions as through the use of dry nitrogen to prevent hydrolysis of the oxime crosslinking compound. Generally, the polymer is added first with the plasticizer. The oxime crosslinker compound is then added followed by the fumed silica, as well as any thermal stabilizing agent. The particular hydrophobic calcium carbonate filler is then added. The tin catalyst is added last in order to minimise any hydrolysis of the crosslinking agent during momentary exposure to atmospheric moisture. The composition is then generally mixed under high speed or agitation as well as under a vacuum for several minutes or even hours to remove the entrapped nitrogen bubbles. The resulting paste formed can be placed or extruded into a desirable container or the like.

The invention will be better understood by reference to the following examples:

Example 1

| | | Weight % |
|---|---|---|
| 1. | 75,000 mPas (cps) viscosity silanol terminated polydimethylsiloxane | 40.27 |
| 2. | 1000 mPas (cps) trimethylsilyl terminated polydimethylsiloxane | 15.55 |
| 3. | Stearic acid treated calcium carbonate | 34.23 |
| 4. | Polydimethylsiloxane treated fumed silica having a surface area of approximately $200m^2$/gram | 3.63 |
| 5. | Iron oxide | 1.41 |
| 6. | Methyltris-methylethylketoximosilane | 4.83 |
| 7. | Dimethyltinbisneodecanoate | 0.08 |

This composition was prepared by charging the ingredients into the mixing can of a vertical laboratory change can mixer which had been flushed with dry nitrogen to prevent hydrolysis of the oxime crosslinker. The ingredients were subsequently added in the following order: (1), (2), (6) , (5), (3), (4) and (7) . The ingredients were then mixed at high speed under vacuum for approximately two hours and afterwards the resulting paste was transferred to a pressure Semco mixer. It was then extruded from the pressure Semco into 170 g (six ounce) polyethylene cartridges. ASTM sheets of the product were prepared and allowed to cure on exposure to atmospheric moisture for seven days and then tested in the manner described above.

In another experiment 0.5 weight percent of an adhesion promoter was added to the composition of Example 1.

The resultant one component RTV sealant was used to prepare peel adhesion specimens. After two weeks cure it yielded excellent adhesion properties on an aluminium substrate as indicated by the resulting cohesive failure of the specimens when they were pulled on an Instron tester.

A basic screening formulation containing comparatively high viscosity (75,000 mPas (cps)) silanol terminated polymer was utilized in evaluating the performance characteristics of various fillers. The high viscosity polymer was chosen because its elevated molecular weight imparts characteristically greater elongation properties and hence contributes to the low modulus behavior of the resulting sealant products. The composition of the test formulation was as follows:

Example 2

High Viscosity Polymer

| | | Weight % |
|---|---|---|
| 1. | Devolatilized silanol terminated dimethylpolysiloxane having a viscosity of 75,000 mPas (cps) | 45.81 |
| 2. | A devolatilized trimethylsilyl terminated dimethylpolysiloxane plasticizer fluid having a viscosity of 1000 mPas (cps) | 17.68 |
| 3. | A trimethylsiloxy treated fumed silica (Wacker HDK H-20) | 4.12 |
| 4. | Iron oxide powder | 1.60 |
| 5. | Methyltri(methylethylketoximo)silane | 5.50 |
| 6. | Dimethyltinbis-neodecanoate | 0.09 |
| 7. | Test filler | 25.20 |

The above compositions were prepared by charging the ingredients into vertical laboratory change can mixer under dry nitrogen to prevent the hydrolysis of the oxime crosslinker. The ingredients were added in the following order: (1), (2), (5), (3), (4), (7) and (6). The composition was mixed at high agitator speed under dry nitrogen for one hour after the test filler (7) had been added. The dimethyltin bis-neodecanoate was then added and mixed under vacuum for twenty minutes to remove the entrapped nitrogen. The following commercial grades of filler were examined: OMYA F-T (stearic acid treated calcium carbonate), Albacar 5970 (precipitation calcium carbonate), Imsil 54 (ground quartz), white #1 (ground calcium carbonate), Emtal 42 (a talc), Armco 70 (ground calcium carbonate) and Huber 90A (a clay). Both white #1 calcium carbonate and Huber 90A clay caused the RTV silicone to cure in the container due to high moisture contents. Both the Imsil 54 ground quartz and Emtal 42 talc yielded high modulus properties than desired for the high nolecular weight 75,000 mPas (cps) polymer and also lacked the oil stabilization effects imparted by their calcium carbonate counterparts. Both the initial room temperature physical properties and oil immersion characteristics are shown on Table I.

Examination of the data in Table I shows the advantages of utilizing certain types of calcium carbonates. Note that the percentage loss of tensile strength after oil immersion is approximately one-half that of compositions containing the other filler types. Weight loss studies revealed that the filler must usually contain less than 0.2 weight percent moisture to yield a stable composition. The White #1 calcium carbonate cured in the tube because it had a moisture content of approximately 0.5 percent, whereas the clay had a moisture content of approximately 0.7 percent.

To further illustrate the influence of filler type and moisture level of the behavior of the final formed-in-place gasketing product, the following example is given. The filler utilized was a fine grade of stearic acid treated calcium carbonate known as Ultra-Pflex and having an average particle size of 0.07 pm. The moisture content of the filler was approximately 0.4 WT. percent. The water was apparently occluded in the filler structure since it took several days for the sealant to vulcanize within the moisture-proof tube. However, excellent low modulus properties were achieved with the comparatively low molecular weight 11,000 mPas (cps), silanol terminated dimethylpolysiloxane polymer.

TABLE 1

THE EFFECT OF FILLER TYPES

ON THE MODULUS AND OIL RESISTANCE PROPERTIES

ROOM TEMPERATURE PROPERTIES

(SEVEN DAYS 25°C AND 50% RELATIVE HUMIDITY)

| FILLER TYPE | OMYA FT STEARIC ACID TREATED CALCIUM CARBONATE | ALBACAR 5970 PRECIPITATED CALCIUM CARBONATE | WHITE #1 GROUND CALCIUM CARBONATE | ARMCO 70 CALCIUM CARBONATE | IMSIL 54 GROUND QUARTZ SILICA | EMTAL 42 TALC | HUBER 90 CLAY |
|---|---|---|---|---|---|---|---|
| SHORE A, HARDNESS | 25 | 34 | CURED | 30 | 31 | 34 | CURED |
| TENSILE, kPa(psi) | 1324 (192) | 1875 (272) | IN | 1151 (167) | 1682 (206) | 1420 (206) | IN |
| @ 50% MODULUS | 276 (40) | 338 (49) | TUBE | 303 (44) | 455 (66) | 503 (73) | TUBE |
| @ 75% MODULUS | 352 (51) | 448 (65) | | 421 (61) | 572 (83) | 669 (97) | |
| @ 100% MODULUS | 421 (61) | 572 (83) | | 496 (72) | 710 (103) | 820 (119) | |
| ELONGATION, % | 460 | 480 | | 380 | 260 | 280 | |
| TWO WEEKS @ 149°C (300°F) IN 5W-30 FACTORY FILL ENGINE OIL (CITGO) | | | | | | | |
| SHORE A, HARDNESS | 20 | 25 | -- | 20 | 23 | 22 | CURED |
| TENSILE, KPA PSI | 1000 (145) | 1579 (229) | -- | 834 (121) | 779 (113) | 820 (119) | IN |
| % DECREASE | -25 | -16 | -- | -28 | -54 | -43 | TUBE |
| ELONGATION, % | 410 | 470 | -- | 380 | 330 | 430 | |

Example 3

Low Modulus FIPG Silicone

| (Low Viscosity Version) | | |
|---|---|---|
| I. Composition: | | Weight % |
| 1. | Devolatilized silanol terminated dimethylpolysiloxane having a viscosity of 11,000 mPas (cps). | 44.19 |
| 2. | A devolatilized trimethylsilyl terminated dimethylpolysiloxane plasticizer fluid having a viscosity of 1,000 mPas (cps). | 17.06 |
| 3. | A trimethylsiloxy treated fumed silica (Wacker HDK H-20) | 3.98 |
| 4. | Ultra-Pflex filler (0.07 µm size stearic acid treated calcium carbonate) | 28.72 |
| 5. | Methyltri-(methylethylketoximo)silane | 5.30 |
| 6. | Adhesion promoter | 0.22 |
| 7. | Fungicide | 0.44 |
| 8. | Dimethyltinbis-neodecanoate | 0.09 |
| | | 100.00 |

| II. Performance Properties | | |
|---|---|---|
| Cure time: | Seven days at 50% relative Humidity and 25°C | |
| Shore A, hardness | -- | 30 |
| Tensile, kPa (psi) | 1889 | (274) |
| @ 50% modulus | 290 | (42) |
| @ 75% modulus | 365 | (53) |
| @ 100% modulus | 455 | (66) |
| Elongation, % | | 530 |

One final example of the benefits to be derived from this technology is shown below. The composition has been designed to be of a medium modulus formed-in-place gasketing product. It aptly shows the superior oil resistance imparted by the technology described in this disclosure. Note the low thirteen percent loss in tensile strength in comparison with the forty to fifty percentage decrease normally observed in other systems (see examples shown earlier).

Example 4

Medium Modulus

| Formulation | | |
|---|---|---|
| I. Composition: | | Weight % |
| 1. | Devolatilized silanol terminated dimethylpolysiloxane having a viscosity of 15,000 mPas (cps). | 39.79 |
| 2. | A devolatilized, trimethylsilyl terminated dimethylpolysiloxane plasticizer fluid having a viscosity of 1,000 mPas (cps). | 15.36 |
| 3. | A trimethylsiloxy treated fumed silica (Wacker HDK H-20) | 5.17 |
| 4. | Stearic acid treated calcium carbonate (OMYA F-T) | 33.82 |
| 5. | Carbon black pigment | 1.00 |

Continuation of the Table on the next page

(continued)

| Formulation | | |
|---|---|---|
| I. Composition: | | Weight % |
| 6. | Vinyl tri-(methylethylketoximo)silane | 4.78 |
| 7. | Dimethyltinbis-neodecanoate | 0.08 |
| | | 100.0 |

| II. Performance Properties: | | | |
|---|---|---|---|
| a. | Initial | | |
| | Shore A, hardness | -- | 40 |
| | Tensile, kPa (psi) | 1503 | (218) |
| | 50% modulus | 490 | (71) |
| | 75% modulus | 607 | (88) |
| | 100% modulus | 689 | (100) |
| | Elongation, % | | 310 |
| b. | Properties after immersion for 14 days @ 150°C (300°F) in 5 W 30 factory fill engine oil. | | |
| | Shore A, hardness | -- | 22 |
| | Tensile, kPa (psi) | 1310 | (190) |
| | % Decrease | | -13 |
| | Elongation, % | | 340 |

A summary of the physical characteristics of the calcium carbonates utilized is given in the table shown below:

PHYSICAL CHARACTERISTICS OF CALCIUM CARBONATES

| | OMYA F-T (1) | Ultra Pflex (2) | Albacar 5970 (3) | White #1 Calcium Carbonate | Armco 70 (5) |
|---|---|---|---|---|---|
| Surface Treatment | Stearic Acid | Stearic Acid | None | None | None |
| Average Particle Size, µm | 2.0 | 0.07 | 2.0 | 14 | 7.0 |
| Moisture content, Weight % | 0.2 | 0.4 | 0.2 | 0.5 | 0.2 |
| Oil Absorption grams/100 grams | 14 | 35 | 38 | -- | |
| Specific Gravity | 2.71 | 2.65 | 2.71 | 2.71 | 2.71 |
| Type | Ground | Precipitated | Precipitated | Ground | Ground |

Sources:

(1) OMYA F-T -- OMYA, Inc. 61 Main Street, Proctor, Vt. 05765, USA

(2) Ultra-Pflex -- Pfizer Minerals, Pigments, and Metals Divn. 235 East 42nd Street, New York, New York 10017, USA.

(3) Albacar 5970 -- Pfizer Minerals, Pigments, and Metals Divn. 235 East 42nd Street, New York, New York 10017, USA.

(4) White #1 Calcium Carbonate -- Thompson, Weinman and Co. P.O. Box 130, Carterville, GA 30120, USA

(5) Armco Carbonate Products, P.O. Box 911, Dept. LCF-282, Piqua, Ohio 45356, USA.

From examining the above examples, it should be apparent that good physical properties such as low modulus

values, and high elongation characteristics along with very good oil immersion properties were obtained. Thus, it should be apparent from the present invention that, although low modulus and high elongation values are obtained, the compositions of the present invention have very good oil resistance properties.

## Claims

1. A low modulus, one component, room temperature, vulcanizable silicone rubber composition comprising:

   from 25 to 90 percent by weight based on the total weight of the composition of a devolatilized silanol-terminated diorgano-siloxane base polymer having a viscosity from 2,000 to 250,000 mPas (centipoise) at 25°C, in which the organo groups are the same or different and are selected from alkyl having from 1 to 8 carbon atoms, cycloalkyl having from 4 to 7 carbon atoms, alkenyl having from 2 to 8 carbon atoms, aryl or alkyl substituted aryl having from 6 to 14 carbon atoms, and fluoroalkyl having from 1 to 8 carbon atoms; and

   from 0 to 40 percent by weight based upon the total weight of the composition of a devolatilized diorganopolysiloxane fluid plasticizer terminated with triorganosiloxy groups, in which the organo groups are monovalent radicals as set forth above with regard to the base polymer, the plasticizer having a viscosity from 50 to 100,000 mPas (centipoise) at 25°C;

   together with a cross-linking agent, a catalyst and a filler,

   characterized in that the composition contains:

   as the cross-linking agent from 2 to 15 percent by weight based upon the total weight of the composition of an oxime of the formula

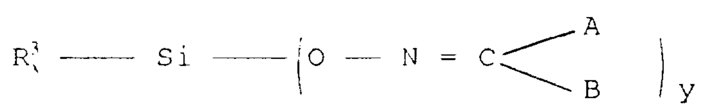

   wherein y is 3.2 to 3, x is 0.8 to 1.0, and $R^3$ is selected from alkyl having from 1 to 8 carbon atoms, alkenyl having from 2 to 8 carbon atoms, haloalkyl having from 1 to 8 carbon atoms, trifluoroalkyl having from 1 to 8 carbon atoms, and haloalkenyl having from 2 to 8 carbon atoms, A and B, which may be the same or different, are each selected from hydrogen, alkyl having from 1 to 8 carbon atoms, haloalkyl having from 1 to 8 carbon atoms, cycloalkyl having from 4 to 7 carbon atoms, alkenyl having from 2 to 8 carbon atoms, and cycloalkenyl having from 4 to 7 carbon atoms, with the proviso that only one of A and B may be hydrogen; together with

   from 0.01 to 0.5 percent by weight based upon the total weight of the composition of an organo tin catalyst; and

   from 5 to 60 percent by weight based upon the total weight of the composition of a hydrophobic calcium carbonate filler, which has a water content of 0.2 percent or less, except that the water content may be up to 0.4 percent provided that the filler is present in an amount of 15 percent or less,

   with the proviso that the composition does not contain a silane or siloxane containing in the molecule an amino group bonded to silicon by an alkylene moiety optionally interrupted by an ether linkage and in which remaining valencies of the nitrogen atom are bonded to hydrogen or an alkylene moiety.

2. A silicone rubber composition according to claim 1 characterised in that the hydrophobic filler is a treated ground or precipitated calcium carbonate.

3. A silicone rubber composition according to claim 1 or 2 characterised in that the hydrophobic filler has a particle size in the range 0.03 to 50 µm.

4. A silicone rubber composition according to any of claims 1 to 3 characterised in that the oxime cross-linking agent is present in an excess relative to the silanol groups in the base polymer, the equivalent ratio being from 1.2 to 4.0.

5. A silicone rubber composition according to any of claims 1 to 4 also including from 0.1 to 5 percent by weight of an

additive which reduces oxidation and thermal rearrangement of polymers at elevated temperature.

**6.** A silicone rubber composition according to any of claims 1 to 5 which optionally comprises from 1 to 20 percent by weight of a reinforcing filler.

**7.** Use of

i) from 2 to 15 percent by weight based upon the total weight of the composition of an oxime of the formula

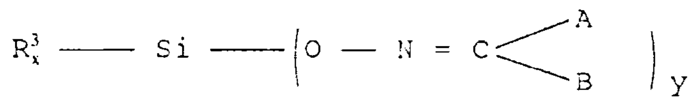

wherein y is 3.2 to 3, x is 0.8 to 1.0, and $R^3$ is selected from alkyl having from 1 to 8 carbon atoms, alkenyl having from 2 to 8 carbon atoms, haloalkyl having from 1 to 8 carbon atoms, trifluoroalkyl having from 1 to 8 carbon atoms, and haloalkenyl having from 2 to 8 carbon atoms, A and B, which may be the same or different, are each selected from hydrogen, alkyl having from 1 to 8 carbon atoms, haloalkyl having from 1 to 8 carbon atoms, cycloalkyl having from 4 to 7 carbon atoms, alkenyl having from 2 to 8 carbon atoms, and cycloalkenyl having from 4 to 7 carbon atoms, with the proviso that only one of A and B may be hydrogen;
ii) from 0.01 to 0.5 percent by weight based upon the total weight of the composition of an organo tin catalyst; and
iii) from 5 to 60 percent by weight based upon the total weight of the composition of a hydrophobic calcium carbonate filler, which has a water content of 0.2 percent or less, except that the water content may be up to 0.4 percent provided that the filler is present in an amount of 15 percent or less;

to provide oil resistance together with low modulus in a one component, room temperature, vulcanizable silicone rubber composition comprising in addition:

from 25 to 90 percent by weight based on the total weight of the composition of a devolatilized silanol-terminated diorgano-siloxane base polymer having a viscosity from 2,000 to 250,000 mPas (centipoise) at 25°C, in which the organo groups are the same or different and are selected from alkyl having from 1 to 8 carbon atoms, cycloalkyl having from 4 to 7 carbon atoms, alkenyl having from 2 to 8 carbon atoms, aryl or alkyl substituted aryl having from 6 to 14 carbon atoms, and fluoroalkyl having from 1 to 8 carbon atoms; and
from 0 to 40 percent by weight based upon the total weight of the composition of a devolatilized diorganopolysiloxane fluid plasticizer terminated with triorganosiloxy groups, in which the organo groups are monovalent radicals as set forth above with regard to the base polymer, the plasticizer having a viscosity from 50 to 100,000 mPas (centipoise) at 25°C.

**8.** Use as claimed in claim 7 characterised in that the hydrophobic filler is a treated ground or precipitated calcium carbonate.

**9.** Use as claimed in claim 7 or 8 characterised in that the hydrophobic filler has a particle size in the range 0.03 to 50 μm.

**10.** Use as claimed in any of claims 7 to 9 characterised in that the oxime cross-linking agent is present in an excess relative to the silanol groups in the base polymer, the equivalent ratio being from 1.2 to 4.0.

**11.** Use as claimed in any of claims 7 to 10 characterised in that from 0.1 to 5 percent by weight of an additive which reduces oxidation and thermal rearrangement of polymers at elevated temperature is comprised in the combination.

**12.** Use as claimed in any of claims 7 to 11 characterised in that the composition comprises optionally from 1 to 20 percent by weight of a reinforcing filler.

## Patentansprüche

**1.** Einkomponentige bei Raumtemperatur vulkanisierbare Siliconkautschuk-Zusammensetzung mit niedrigem Modul, umfassend:

25 bis 90 Gew.-%, bezogen auf das Gesamtgewicht der Zusammensetzung, eines entgasten Silanol-terminierten Diorganosilioxan-Grundpolymeren, das eine Viskosität von 2 000 bis 250 000 mPas (Centipoise) bei 25 °C aufweist, in dem die organischen Gruppen gleich oder verschieden sind und ausgewählt sind aus Alkyl mit 1 bis 8 Kohlenstoffatomen, Cycloalkyl mit 4 bis 7 Kohlenstoffatomen, Alkenyl mit 2 bis 8 Kohlenstoffatomen, Aryl- oder Alkyl-substituiertem Aryl mit 6 bis 14 Kohlenstoffatomen und Fluoralkyl mit 1 bis 8 Kohlenstoffatomen; und

0 bis 40 Gew.-%, bezogen auf das Gesamtgewicht der Zusammensetzung, eines entgasten Diorganopolysiloxan-Weichmacherfluids, das mit Triorganosiloxygruppen terminiert ist, in dem die organischen Gruppen einwertige Reste, wie vorstehend aufgeführt, bezüglich des Grundpolymeren sind, wobei der Weichmacher eine Viskosität von 50 bis 100 000 mPas (Centipoise) bei 25 °C aufweist;

zusammen mit einem Vernetzungsmittel, einem Katalysator und einem Füllstoff,

dadurch gekennzeichnet, daß die Zusammensetzung enthält:

als Vernetzungsmittel 2 bis 15 Gew.-%, bezogen auf das Gesamtgewicht der Zusammensetzung, eines Oxims der Formel

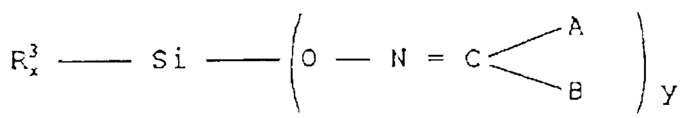

,

worin y für 3,2 bis 3 steht, x für 0,8 bis 1,0 steht und $R^3$ ausgewählt ist aus Alkyl mit 1 bis 8 Kohlenstoffatomen, Alkenyl mit 2 bis 8 Kohlenstoffatomen, Halogenalkyl mit 1 bis 8 Kohlenstoffatomen, Trifluoralkyl mit 1 bis 8 Kohlenstoffatomen und Halogenalkenyl mit 2 bis 8 Kohlenstoffatomen, A und B, die gleich oder verschieden sein können, jeweils ausgewählt sind aus Wasserstoff, Alkyl mit 1 bis 8 Kohlenstoffatomen, Halogenalkyl mit 1 bis 8 Kohlenstoffatomen, Cycloalkyl mit 4 bis 7 Kohlenstoffatomen, Alkenyl mit 2 bis 8 Kohlenstoffatomen und Cycloalkenyl mit 4 bis 7 Kohlenstoffatomen, mit der Maßgabe, daß nur eines von A und B Wasserstoff sein kann; zusammen mit

0,01 bis 0,5 Gew.-%, bezogen auf das Gesamtgewicht der Zusammensetzung, eines Organozinn-Katalysators; und

5 bis 60 Gew.-%, bezogen auf das Gesamtgewicht der Zusammensetzung, eines hydrophoben Calciumcarbonat-Füllstoffes, der einen Wassergehalt von 0,2 % oder weniger aufweist, mit der Ausnahme, daß der Wassergehalt bis zu 0,4 % betragen kann, mit der Maßgabe, daß der Füllstoff in einer Menge von 15 % oder weniger vorhanden ist,

mit der Maßgabe, daß die Zusammensetzung kein Silan oder Siloxan enthält, das in dem Molekül eine Aminogruppe enthält, die an das Silicium über eine Alkylengruppierung, gegebenenfalls unterbrochen durch eine Etherverknüpfung, gebunden ist, und in der die verbleibenden Valenzen des Stickstoffatoms an Wasserstoff oder eine Alkylengruppierung gebunden sind.

**2.** Siliconkautschuk-Zusammensetzung nach Anspruch 1, dadurch gekennzeichnet, daß der hydrophobe Füllstoff ein behandeltes gemahlenes oder ausgefälltes Calciumcarbonat ist.

**3.** Siliconkautschuk-Zusammensetzung nach Anspruch 1 oder 2, dadurch gekennzeichnet, daß der hydrophobe Füllstoff eine Teilchengröße im Bereich von 0,03 bis 50 µm besitzt.

**4.** Siliconkautschuk-Zusammensetzung nach einem der Ansprüche 1 bis 3, dadurch gekennzeichnet, daß das Oxim-Vernetzungsmittel in einem Überschuß relativ zu den Silanolgruppen in dem Grundpolymer vorhanden ist, wobei das Äquivalentverhältnis 1,2 bis 4,0 beträgt.

**5.** Siliconkautschuk-Zusammensetzung nach einem der Ansprüche 1 bis 4, die ferner 0,1 bis 5 Gew.-% eines Zusatzstoffes einschließt, der die Oxidation und thermische Umlagerung der Polymere bei erhöhter Temperatur verringert.

**6.** Siliconkautschuk-Zusammensetzung nach einem der Ansprüche 1 bis 5, die gegebenenfalls 1 bis 20 Gew.-% eines verstärkenden Füllstoffes umfaßt.

**7.** Verwendung von

i) 2 bis 15 Gew.-%, bezogen auf das Gesamtgewicht der Zusammensetzung, eines Oxims der Formel

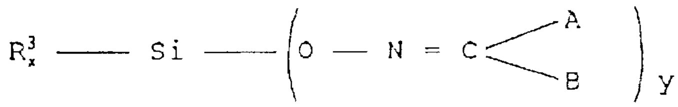

,

worin y für 3,2 bis 3 steht, x für 0,8 bis 1,0 steht, und $R^3$ ausgewählt ist aus Alkyl mit 1 bis 8 Kohlenstoffatomen, Alkenyl mit 2 bis 8 Kohlenstoffatomen, Halogenalkyl mit 1 bis 8 Kohlenstoffatomen, Trifluoralkyl mit 1 bis 8 Kohlenstoffatomen und Halogenalkenyl mit 2 bis 8 Kohlenstoffatomen, A und B, die gleich oder verschieden sein können, jeweils ausgewählt sind aus Wasserstoff, Alkyl mit 1 bis 8 Kohlenstoffatomen, Halogenalkyl mit 1 bis 8 Kohlenstoffatomen, Cycloalkyl mit 4 bis 7 Kohlenstoffatomen, Alkenyl mit 2 bis 8 Kohlenstoffatomen und Cycloalkenyl mit 4 bis 7 Kohlenstoffatomen, mit der Maßgabe, daß nur eines von A und B Wasserstoff sein kann;

ii) 0,01 bis 0,5 Gew.-%, bezogen auf das Gesamtgewicht der Zusammensetzung, eines Organozinn-Katalysators; und

iii) 5 bis 60 Gew.-%, bezogen auf das Gesamtgewicht der Zusammensetzung, eines hydrophoben Calciumcarbonat-Füllstoffes, der einen Wassergehalt von 0,2 % oder weniger aufweist, mit der Ausnahme, daß der Wassergehalt bis zu 0,4 % betragen kann, vorausgesetzt, daß der Füllstoff in einer Menge von 15 % oder weniger vorhanden ist;

um eine Ölbeständigkeit zusammen mit dem niedrigem Modul in einer einkomponentigen bei Raumtemperatur vulkanisierbaren Siliconkautschuk-Zusammensetzung bereitzustellen, die außerdem umfaßt:

25 bis 90 Gew.-%, bezogen auf das Gesamtgewicht der Zusammensetzung, eines entgasten Silanol-terminierten Polymeren auf Diorganosilioxan-Basis, das eine Viskosität von 2 000 bis 250 000 mPas (Centipoise) bei 25 °C aufweist, in dem die organischen Gruppen gleich oder verschieden sind und ausgewählt sind aus Alkyl mit 1 bis 8 Kohlenstoffatomen, Cycloalkyl mit 4 bis 7 Kohlenstoffatomen, Alkenyl mit 2 bis 8 Kohlenstoffatomen, Aryl- oder Alkyl-substituiertem Aryl mit 6 bis 14 Kohlenstoffatomen und Fluoralkyl mit 1 bis 8 Kohlenstoffatomen; und

0 bis 40 Gew.-%, bezogen auf das Gesamtgewicht der Zusammensetzung, eines entgasten Diorganopolysiloxan-Weichmacherfluids, das mit Triorganosiloxygruppen terminiert ist, in dem die organischen Gruppen einwertige Reste, wie vorstehend ausgeführt, bezüglich des Grundpolymeren sind, wobei der Weichmacher eine Viskosität von 50 bis 100 000 mPas (Centipoise) bei 25 °C aufweist.

**8.** Verwendung nach Anspruch 7, dadurch gekennzeichnet, daß der hydrophobe Füllstoff ein behandeltes gemahlenes oder ausgefälltes Calciumcarbonat ist.

**9.** Verwendung nach Anspruch 7 oder 8, dadurch gekennzeichnet, daß der hydrophobe Füllstoff eine Teilchengröße im Bereich von 0,03 bis 50 µm besitzt.

**10.** Verwendung nach einem der Ansprüche 7 bis 9, dadurch gekennzeichnet, daß das Oxim-Vernetzungsmittel in einem Überschuß relativ zu den Silanolgruppen in dem Grundpolymer vorhanden ist, wobei das Äquivalentverhältnis 1,2 bis 4,0 beträgt.

**11.** Verwendung nach einem der Ansprüche 7 bis 10, dadurch gekennzeichnet, daß 0,1 bis 5 Gew.-% eines Zusatzstoffes, der die Oxidation und die thermische Umlagerung der Polymere bei erhöhter Temperatur verringert, in der Kombination eingeschlossen sind.

**12.** Verwendung nach einem der Ansprüche 7 bis 11, dadurch gekennzeichnet, daß die Zusammensetzung gegebenenfalls 1 bis 20 Gew.-% eines verstärkenden Füllstoffes umfaßt.

## Revendications

1. Une composition de caoutchouc de silicone à un seul composant, vulcanisable à la température ambiante, à faible module, comprenant :

   25 à 90 pour cent en poids, par rapport au poids total de la composition, d'un polymère de diorganosiloxane de base, terminé par des groupes silanols, débarrassé des substances volatiles, ayant une viscosité de 2000 à 250 000 mPa.s (centipoises) à 25°C, dans lequel les groupes organiques sont identiques ou différents et sont choisis parmi les groupes alkyles ayant 1 à 8 atomes de carbone, cycloalkyles ayant 4 à 7 atomes de carbone, alcényles ayant 2 à 8 atomes de carbone, aryles ou aryles à substitution alkylique ayant 6 à 14 atomes de carbone et fluoralkyles ayant 1 à 8 atomes de carbone ; et
   0 à 40 pour cent en poids, par rapport au poids total de la composition, d'un plastifiant consistant en un fluide de diorganopolysiloxane terminé par des groupes triorganosiloxy, débarrassé des substances volatiles, dans lequel les groupes organiques sont des radicaux monovalents tels que définis ci-dessus à propos du polymère de base, le plastifiant ayant une viscosité de 50 à 100 000 mPa.s (centipoises) à 25°C ;
   ainsi qu'un agent de réticulation, un catalyseur et une charge, caractérisée en ce que la composition contient: comme agent de réticulation, 2 à 15 pour cent en poids, par rapport au poids total de la composition, d'une oxime de la formule

   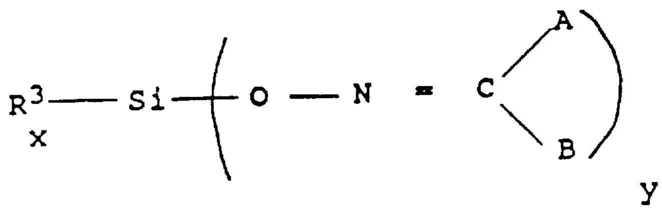

   où y vaut 3,2 à 3, x vaut 0,8 à 1,0, $R^3$ est choisi parmi les groupes alkyles ayant 1 à 8 atomes de carbone, alcényles ayant 2 à 8 atomes de carbone, halogénalkyles ayant 1 à 8 atomes de carbone, trifluoralkyles ayant 1 à 8 atomes de carbone et halogénalkyles ayant 2 à 8 atomes de carbone, A et B, qui peuvent être identiques ou différents, sont chacun choisis parmi l'hydrogène et les groupes alkyles ayant 1 à 8 atomes de carbone, halogénalkyles ayant 1 à 8 atomes de carbone, cycloalkyles ayant 4 à 7 atomes de carbone, alcényles ayant 2 à 8 atomes de carbone et cycloalcényles ayant 4 à 7 atomes de carbone, avec la condition qu'un seul de A et B peut être de l'hydrogène ; ainsi que
   0,01 à 0,5 pour cent en poids, par rapport au poids total de la composition, d'un catalyseur organique à l'étain ; et
   5 à 60 pour cent en poids, par rapport au poids total de la composition, d'une charge hydrophobe consistant en carbonate de calcium, dont la teneur en eau est de 0,2 pour cent ou moins, excepté que la teneur en eau peut aller jusqu'à 0,4 pour cent si la charge est présente en une quantité de 15 pour cent ou moins ; avec la condition que la composition ne contient pas un silane ou un siloxane contenant dans sa molécule un groupe amino lié au silicium par un fragment alkylène facultativement interrompu par une liaison éther et dans lequel les valences restantes de l'atome d'azote sont liées à l'hydrogène ou à un fragment alkylène.

2. Une composition de caoutchouc de silicone selon la revendication 1, caractérisée en ce que la charge hydrophobe est un carbonate de calcium broyé ou précipité ayant été traité.

3. Une composition de catoutchouc de silicone selon la revendication 1 ou 2, caractérisée en ce que la charge hydrophobe a une taille de particules comprise dans l'intervalle de 0,03 à 50 µm.

4. Une composition de caoutchouc de silicone selon l'une quelconque des revendications 1 à 3, caractérisée en ce que l'oxime employée comme agent de réticulation est présente en excès par rapport aux groupes silanols du polymère de base, le rapport d'équivalents étant de 1,2 à 4,0.

5. Une composition de caoutchouc de silicone selon l'une quelconque des revendications 1 à 4, contenant également 0,1 à 5 pour cent en poids d'un additif qui diminue l'oxydation et la transposition thermique des polymères à température élevée.

6. Une composition de caoutchouc de silicone selon l'une quelconque des revendications 1 à 5, qui comprend facultativement 1 à 20 pour cent en poids d'une charge de renforcements.

7. L'utilisation de :

i) de 2 à 15 pour cent en poids, par rapport au poids total de la composition, d'une oxime de la formule

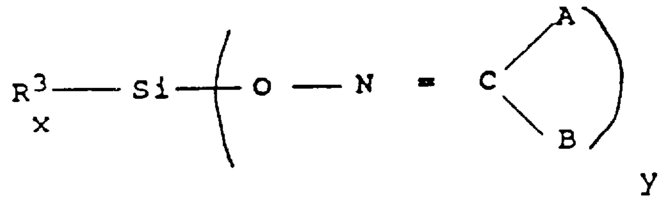

où y vaut 3,2 à 3, x vaut 0,8 à 1,0, $R^3$ est choisi parmi les groupes alkyles ayant 1 à 8 atomes de carbone, alcényles ayant 2 à 8 atomes de carbone, halogénalkyles ayant 1 à 8 atomes de carbone, trifluoralkyles ayant 1 à 8 atomes de carbone et halogénalkyles ayant 2 à 8 atomes de carbone, A et B, qui peuvent être identiques ou différents, sont chacun choisis parmi l'hydrogène et les groupes alkyles ayant 1 à 8 atomes de carbone, halogénalkyles ayant 1 à 8 atomes de carbone, cycloalkyles ayant 4 à 7 atomes de carbone, alcényles ayant 2 à 8 atomes de carbone et cycloalcényles ayant 4 à 7 atomes de carbone, avec la condition qu'un seul de A et B peut être de l'hydrogène ;
ii) de 0,01 à 0,5 pour cent en poids, par rapport au poids total de la composition, d'un catalyseur organique à l'étain ; et
iii) de 5 à 60 pour cent en poids, par rapport au poids total de la composition, d'une charge hydrophobe consistant en carbonate de calcium, dont la teneur en eau est de 0,2 pour cent ou moins, excepté que la teneur en eau peut aller jusqu'à 0,4 pour cent si la charge est présente en une quantité de 15 pour cent ou moins ;

pour conférer de la résistance à l'huile ainsi qu'un bas module à une composition de caoutchouc de silicone à un seul composant, vulcanisable à la température ambiante, comprenant, en outre :

de 25 à 90 pour cent en poids, par rapport au poids total de la composition, d'un polymère de diorganosiloxane de base, terminé par des groupes silanols, débarrassé des substances volatiles, ayant une viscosité de 2000 à 250 000 mPa.s (centipoises) à 25°C, dans lequel les groupes organiques sont identiques ou différents et sont choisis parmi les groupes alkyles ayant 1 à 7 atomes de carbone, alcényles ayant 2 à 8 atomes de carbone, aryles ou aryles à substitution alkylique ayant 6 à 14 atomes de carbone et fluoralkyles ayant 1 à 8 atomes de carbone ; et
0 à 40 pour cent en poids, par rapport au poids total de la composition, d'un plastifiant consistant en un fluide de diorganopolysiloxane terminé par des groupes tiorganosiloxy, débarrassé des substances volatiles, dans lequel les groupes organiques sont des radicaux monovalents tels que définis ci-dessus à propos du polymère de base, le plastifiant ayant une viscosité de 50 à 100 000 mPa.s (centipoises) à 25°C.

**8.** Utilisation selon la revendication 7, caractérisée en ce que la charge hydrophobe est un carbonate de calcium broyé ou précipité ayant été traité.

**9.** Utilisation selon la revendication 7 ou 8, caractérisée en ce que la charge hydrophobe a une taille de particules comprise dans l'intervalle de 0,03 à 50 µm.

**10.** Utilisation selon l'une quelconque des revendications 7 à 9, caractérisée en ce que l'oxime employée comme agent de réticulation est présente en excès par rapport aux groupes silanols du polymère de base, le rapport d'équivalents étant de 1,2 à 4,0.

**11.** Utilisation selon l'une quelconque des revendications 7 à 10, caractérisée en ce que la composition contient également 0,1 à 5 pour cent en poids d'un additif qui diminue l'oxydation et la transposition thermique des polymères à température élevée.

**12.** Utilisation selon l'une quelconque des revendications 7 à 11, caractérisée en ce que la composition comprend facultativement 1 à 20 pour cent en poids d'une charge de renforcement.